# EUROPEAN PATENT SPECIFICATION

(11) **EP 2 342 524 B1**
(45) Date of publication and mention of the grant of the patent: **24.10.2018**
(21) Application number: 09760993.7
(22) Date of filing: 04.11.2009
(51) Int. Cl.: F28F 9/26, F28F 21/06, B29C 45/14, F16L 15/00

(54) **LIGHT-WEIGHT CONNECTION BUSH FOR RADIATOR ELEMENTS**
LEICHTER VERBINDUNGSNIPPEL FÜR RADIATORELEMENTE
JOINT NIPPLE POUR ÉLÉMENT RADIATEUR

(30) Priority: 04.11.2008 IT BS20080197
(43) Date of publication of application: 13.07.2011
(73) Proprietor: Mecc-Lan S.r.L, 25030 Zocco D' Erbusco (Brescia) (IT)
(72) Inventor: LANCINI, Franco, I-25030 Adro ( Brescia) (IT)
(74) Representative: Mitola, Marco
(86) International application number: PCT/IB2009/054890
(87) International publication number: WO 2010/052648

(56) References cited:
- WO-A-2007/099568
- AU-A- 5 768 573
- DE-A1- 2 127 863
- DE-A1-102006 051 774
- FR-A1- 2 720 820
- GB-A- 921 446
- GB-A- 1 162 063
- GB-A- 1 433 955
- US-A- 1 340 289
- US-A- 3 614 137
- US-A- 5 152 557

## Description

The present invention relates to a connection bush for radiator elements and in particular to a bush of the lightweight type and a method of producing such a bush.

Specifically, it is known of in the art to make connection bushes for radiators, called 'nipples', which mechanically and fluidically connect two adjacent radiator elements. Examples can be found in US 1340289 A1 or FR 2720820 A1.

In fact, the bushes are hollow, cylindrical bodies which define a through-aperture for the radiant liquid, for instance oil or water. Said bushes on the external lateral surface have a pair of threadings opposite each other, that is one right-handed and one left-handed, so as to be contemporaneously screwed onto the threadings of the connection holes of two radiator elements next to each other.

The bushes also have on their external lateral surface a sealing element, typically an O-ring, to form a hydraulic seal with the inner walls of the radiator elements and channel all the water or oil through the through-section so as to enable the circulation of the radiant fluid between the radiator elements.

The known, state-of-the-art solutions have a number of drawbacks.

For example they are made in metallic material and are therefore heavy and expensive to make. The thickness, and therefore the weight and cost of the bushes, is high since the tightening torque of the bushes may reach as high as 20 Kgm.

In addition, the metallic bushes tend to transmit the heat to the gasket sealing the bush body and the inner lateral walls of the radiator elements between which the bush is inserted.

The rubber gasket tends to become damaged as a result of overheating and no longer ensures tightness over time. This phenomenon may occur both during normal functioning of the radiator and also, above all, during the painting phase during which pre-assembled packs of radiators are placed in painting stoves at about 200°C for approximately 10 minutes.

In addition, in oil radiators using electric resistors inside the radiant elements, on account of thermal warping, accidental contact between the resistors and the inner lateral walls of the bushes may occur; as a result of such contacts the resistors transmit a large quantity of heat to the bushes and from these to the gaskets which thus easily deteriorate. In fact, the resistors reach temperatures of several hundred degrees centigrade.

The excessive transmission of heat to the gaskets through the metal in the bushes may therefore irremediably compromise sealing performance and cause hazardous leakages of liquid from the radiator elements.

In addition, the known, state-of-the-art bushes are heavy and expensive to transport.

The aim of the present invention is to produce a bush which resolves the drawbacks mentioned with reference to the known technique.

Such drawbacks and limitations are resolved by a bush according to claim 1 and the respective manufacturing method of claim 10.

Other embodiments of the bush according to the invention are described in the subsequent claims.

Further characteristics and advantages of the present invention will be evident from the description below, made by way of a non-limiting example, of its preferred embodiments, wherein:
- figure 1 shows a perspective view of a bush according to one embodiment of the present invention;
- figure 2 shows a front view of the bush in figure 1, from the side of the arrow II in figure 1;
- figure 3 shows a cross-section view of the bush in figure 1, along the cross-section plane III-III in figure 2;
- figure 4 shows a perspective view of a component of the bush in figure 1.

The elements or parts of elements common to the embodiments described below will be indicated by the same reference numeral.

With reference to the aforesaid figures, reference numeral 4 globally relates to a connection bush for radiator elements, able to mechanically and fluidically connect two radiator elements adjacent to each other (not shown).

The bush 4 comprises a bush body 8 which defines and delimits, in correspondence with an internal lateral wall 12, a through-section 16 of radiant liquid, such as water or oil for example.

The bush body 8 presents, on an external lateral wall 20, opposite the internal lateral wall 12, a pair of threadings 24 for screwing the bush 4 onto the associable radiator elements,

Preferably, the bush body 8 is a cylindrical body with an X-X axis.

The threadings 24 are preferably opposite each other, that is one right-handed and one left-handed, so as to enable contemporary screwing of the bush 4 onto the radiator elements next to each other.

Advantageously, the bush body 8 is made in plastic material and comprises a core 28 in metallic material, mechanically separate from the bush body 8 and countersunk inside the body 8 itself.

Preferably, the plastic material comprises a thermoplastic and/or heat-hardening plastic.

According to one embodiment said plastic material comprises nylon loaded with glass fibre.

According to one embodiment, the core 28 comprises a cylindrical collar 32 fitted with a number of holes 36 able to form a bond between the bush body 8 and the core 28 countersunk inside it.

According to a further embodiment, said core 28 comprises a cylindrical collar 32 fitted with a number of protuberances or teeth (not shown) able to form a bond between the bush body 8 and the core 28 countersunk inside it.

Preferably, the core 28 presents, in correspondence with the axial rims 40, a regular profile comprising an alternation of ridges 44 and grooves 48.

Axial rims are understood to be rims positioned in correspondence with opposite extremities of the bush body 8 along the X-X axis.

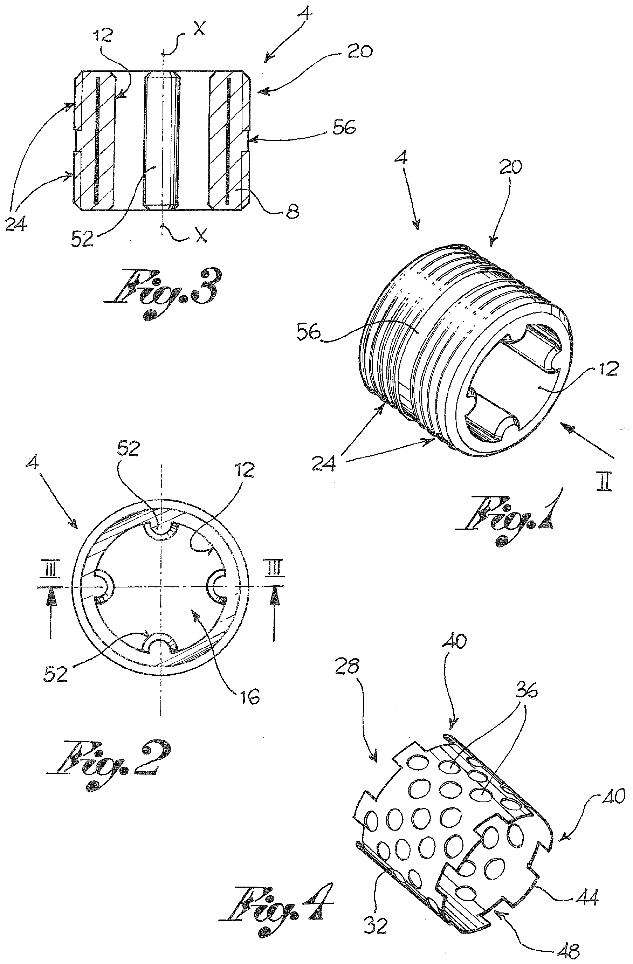

According to possible embodiments, the profile is a triangular, sinusoidal or staggered (figure 4) profile.

The bush body 8 comprises, in correspondence with the inner lateral wall 12, a number of teeth 52 able to permit the grasping and rotation of the bush 4 from the inside, for clamping of the same between the radiator elements.

Preferably, the teeth 52 extend along the entire axial extension of the bush body 8.

The bush body 8 comprises at least two teeth, positioned diametrically opposite each other ; according to possible embodiment variations, the bush body comprises three or four teeth positioned angularly at set intervals, that is the teeth 52 are equally angularly distanced at angles of 120 and 90 degrees respectively.

The teeth 52 are made in one piece with the bush body 8, that is in the same injection moulding.

The bush body 8, in correspondence with the external lateral wall 20 comprises a central ring or seat 56, delimited axially by the pair of threadings 24.

The central ring 56 is axial-symmetric in relation to the axis X-X so as to form a constant support wall for an associable gasket (not shown).

In other words, the central ring 56 is a smooth, cylindrical, lateral wall, free of grooves, hollows or protuberances. Such central ring 56 forms a seat for the gasket and provides constant support of the gasket as well as an improved hydraulic seal between the gasket and the walls of the radiator elements between which the bush is placed.

Preferably, the central ring or seat 56 is radially included between the ridges 44 and the grooves 48 of the external threadings 24 of the bush 8: this way the ridges 44 of the threadings 24 form an axial bond with the gasket which remains positioned in the centre line of the bush body 8.

The method of producing a bush according to the invention will now be described.

Specifically, the method of realisation comprises the phase of predisposing a cylindrical core 28 in metallic material, positioning it in a mould for the production of the bush body 8 and then injecting plastic material so as to form the bush body 8 englobing the core 28 in the plastic.

The phase of predisposing the metallic core 28 preferably comprises cutting a band having an axial width equal to the core 28 from a sheet, and a rolling phase of the cut band into a cylindrical shape. Preferably, the sheet rolled into a cylindrical shape may be directly positioned in the mould before the injection without sealing the rolled band, for example by welding.

In fact, the rolled band is in itself sealed by the injection of plastic material.

Following extraction of the bush from the mould, the superficial finishing of the external lateral wall 20 of the bush 4 both in correspondence with the external threadings 24 and with the central ring or seat 56 of the gasket, may be performed.

As may be appreciated from the description, the bush according to the invention makes it possible to overcome the drawbacks mentioned in relation to the known technique.

Specifically, the bushes made according to the present invention have a mass of approximately one-third of the bushes of the known art, but with the same through-section diameter of the radiant liquid.

In addition such bushes are less expensive to produce given that they require a significantly smaller quantity of metallic material than those of the known art, despite ensuring a hermetic seal and mechanical resistance of the same level.

In addition, the bushes are extremely cheap to transport given that they are decidedly lighter than the bushes of the known art.

Moreover, the bushes of the present invention are coated in a polymer material which does not transmit heat and therefore preserves the gaskets from heat damage both during painting in the stove and during functioning of the radiators.

In addition, in the case of electric radiators working on oil, any accidental contact of the internal resistors with the inner lateral wall of the bushes will not transmit great heat to the gaskets.

Moreover, thanks to the fact that the bush body is made by moulding, the realisation of the teeth for screwing on the bush does not entail the creation of hollows or recesses on the external wall of the bush body. This way the external lateral wall acts as a constant and regular support to the associable gasket which is evenly compressed and deformed against the seats of the radiator elements, ensuring a safe hermetic seal.

Advantageously, the inner metallic core enables the bush to withstand the high axial traction loads generated following tightening of the bush between the radiator elements.

The use of holes or protuberances in the core makes it possible to create bonds or undercuts between the core and the plastic die of the bush body which the core is countersunk in by moulding: such bonds ensure the cohesion of the core and the bush body even when the latter is subjected to high axial loads.

In addition, the core in metallic material ensures resistance of the bush to axial loads over time; specifically, it prevents any sudden tensile breaking of the bush body even in the event that the plastic of the bush body should weaken on account of ageing.

Advantageously, teeth can be made all along the axial length of the bush body by moulding without having to thereby modify the geometry of the seat or central ring for the gasket: such teeth are therefore very resistant and can withstand high tightening torques of the bush without requiring reinforcements of said teeth.

A person skilled in the art may make numerous modifications and variations to the bushes described above so as to satisfy contingent and specific requirements while remaining within the sphere of protection of the invention as defined by the following claims.

## Claims

1. Connection bush (4) for radiator elements, able to mechanically and fluidically connect two radiator elements adjacent to each other, comprising
- a bush body (8) defining and delimiting, in correspondence with an internal lateral wall (12), a through-section (16) of radiant liquid,
- the bush body (8), presenting, on an external lateral wall (20), opposite the internal lateral wall (12), a pair of threadings (24) for screwing the bush (4) onto the associable radiator elements, wherein
- the bush body (8) is made in plastic material and comprises, in correspondence with said inner lateral wall (12), a number of teeth (52) able to permit the grasping and rotation of the bush (4) on the side of the internal lateral wall (12) for clamping of the same between the radiator elements,
wherein the teeth (52) are made in one piece with the bush body (8)
characterizsed in that
- the bush body (8) comprises a core (28) in metallic material, mechanically separate from the bush body (8) and countersunk inside the body (8) itself, wherein
- said core (28) comprises a cylindrical collar (32) fitted with a number of holes (36) able to form a bond between the bush body (8) and the core (28) countersunk inside it.

2. Bush (4) according to claim 1, wherein said plastic material comprises a thermoplastic and/or heat hardening plastic.

3. Bush (4) according to claim 1 or 2, wherein said plastic material comprises nylon loaded with glass fibre.

4. Bush (4) according to any of the previous claims, wherein said core (28) comprises a cylindrical collar (32) fitted with a number of protuberances or teeth able to form a bond between the bush body (8) and the core (28) countersunk inside it.

5. Bush (4) according to any of the previous claims, wherein said core (28) presents, in correspondence with the axial rims (40), a regular profile comprising an alternation of ridges (44) and grooves (48).

6. Bush (4) according to claim 5, wherein said profile is a triangular, sinusoidal or staggered profile.

7. Bush (4) according to any of the previous claims, wherein said teeth (52) extend along the entire axial extension of the bush body (8).

8. Bush (4) according to any of the previous claims, wherein said external lateral wall (20) comprises a central ring (56), delimited axially by the pair of threadings (24), said central ring (56) being axial-symmetric so as to form a constant support wall and a seat for an associable gasket.

9. Radiator comprising at least two radiator elements fluidically and mechanically connected to each other by at least one bush (4) according to any of the claims from 1 to 8.

10. Method of producing a bush (4) according to any of the claims from 1 to 8, comprising the phases of:
- predisposing a cylindrical core (28) in metallic material,
- positioning said core (28) in a mould for the production of the bush body (8),
- injecting plastic material so as to form the bush body (8) englobing the core (28) in the plastic.

11. Method of embodiment according to claim 10, wherein the phase of predisposing the metallic core (28) comprises the phase of cutting a band having an axial width equal to the core (28) from a sheet and the phase of rolling the cut band into a cylindrical shape.

12. Method of embodiment according to claim 11, comprising the phase of superficial finishing of the external lateral wall (20) of the bush (4) in correspondence with the external threadings (24) and of the seat or central ring (56) for the gasket.

## Patentansprüche

1. Verbindungshülse (4) für Strahlerelemente, die fähig ist, zwei benachbarte Strahlerelemente mechanisch und fluidisch zu verbinden, die umfasst:
- einen Hülsenkörper (8), der entsprechend einer inneren Seitenwand (12) einen Durchgangsabschnitt (16) für Strahlungsflüssigkeit definiert und begrenzt,
- den Hülsenkörper (8), der auf einer äußeren Seitenwand (20) entgegengesetzt zu der inneren Seitenwand (12) ein Paar von Gewinden (24) bietet, um die Hülse (4) auf die verbindbaren Strahlerelemente zu schrauben, wobei
der Hülsenkörper (8) aus Kunststoffmaterial hergestellt ist und entsprechend der inneren Seitenwand (12) eine Anzahl von Zähnen (52) umfasst, die fähig sind, das Greifen und Drehen der Hülse (4) auf der Seite der inneren Seitenwand (12) zuzulassen, um sie zwischen den Strahlerelementen einzuspannen,
wobei die Zähne (52) in einem Stück mit dem Hülsenkörper (8) hergestellt sind,
**dadurch gekennzeichnet, dass**
- der Hülsenkörper (8) einen Kern (28) in metallischem Material umfasst, der mechanisch getrennt von dem Hülsenkörper (8) ist und ins Innere des Körpers (8) selbst eingesenkt ist, umfasst, wobei
- der Kern (28) eine zylindrische Manschette (32) umfasst, die mit einer Anzahl von Löchern (36) ausgerüstet ist, die fähig sind, eine Verbindung zwischen dem Hülsenkörper (8) und dem in sein Inneres eingesenkten Kern (28) auszubilden.

2. Hülse (4) nach Anspruch 1, wobei das Kunststoffmaterial einen thermoplastischen und/oder wärmehärtenden Kunststoff umfasst.

3. Hülse (4) nach Anspruch 1 oder 2, wobei das Kunststoffmaterial mit Glasfaser angereichertes Nylon umfasst.

4. Hülse (4) nach einem der vorhergehenden Ansprüche, wobei der Kern (28) eine zylindrische Manschette (32) umfasst, die mit einer Anzahl von Vorsprüngen oder Zähnen ausgerüstet ist, die fähig sind, eine Verbindung zwischen dem Hülsenkörper (8) und dem in sein Inneres eingesenkten Kern (28) auszubilden.

5. Hülse (4) nach einem der vorhergehenden Ansprüche, wobei der Kern (28) entsprechend den axialen Kränzen (40) ein regelmäßiges Profil bietet, das eine Abwechslung von Erhöhungen (44) und Nuten (48) umfasst.

6. Hülse (4) nach Anspruch 5, wobei das Profil ein dreieckiges, sinusförmiges oder abgestuftes Profil ist.

7. Hülse (4) nach einem der vorhergehenden Ansprüche, wobei die Zähne (52) sich entlang der gesamten axialen Ausdehnung des Hülsenkörpers (8) erstrecken.

8. Hülse (4) nach einem der vorhergehenden Ansprüche wobei die äußere Seitenwand (20) einen Mittelring (56) umfasst, der durch das Gewindepaar (24) axial begrenzt ist, wobei der Mittelring (56) axialsymmetrisch ist, um eine durchgehende Haltewand und einen Sitz für eine verbindbare Dichtung zu bilden.

9. Strahler, der wenigstens zwei Strahlerelemente umfasst, die durch wenigstens eine Hülse (4) nacheinem der Ansprüche 1 bis 8 fluidisch und mechanisch miteinander verbunden sind.

10. Verfahren zur Herstellung einer Hülse (4) nach einem der Ansprüche 1 bis 8, das die folgenden Phasen umfasst:
- vorab Anordnen eines zylindrischen Kerns (28) in metallischem Material,
- Positionieren des Kerns (28) in einer Form für die Herstellung des Hülsenkörpers (8),
- Einspritzen von Kunststoffmaterial, um den Hülsenkörper (8) auszubilden, wobei der Kern (28) in dem Kunststoff eingehüllt wird.

11. Verfahrensausführungsform nach Anspruch 10, wobei die Phase des vorab Anordnens des metallischen Kerns (28) die Phase des Schneidens eines Bands mit einer axialen Breite gleich dem Kern (28) von einem Blech und die Phase des Walzens des geschnittenen Bands in eine zylindrische Form umfasst.

12. Verfahrensausführungsform nach Anspruch 11, welche die Phase der Oberflächenendbearbeitung der äußeren Seitenwand (20) der Hülse (4) entsprechend den äußeren Gewinden (24) und des Sitzes oder des Mittelrings (56) für die Dichtung umfasst.

## Revendications

1. Joint nipple (4) pour éléments de radiateur, capable de raccorder au plan mécanique et fluidique deux éléments de radiateur adjacents l'un à l'autre, comprenant :
- un corps de nipple (8) définissant et délimitant, en correspondance avec une paroi latérale interne (12), une section traversante (16) de liquide rayonnant,
- le corps de nipple (8) présentant, sur une paroi latérale externe (20), en regard de la paroi latérale interne (12), une paire de filets (24) pour visser le nipple (4) sur les éléments de radiateur associables,
dans lequel
- le corps de nipple (8) est constitué d'une matière plastique et comprend, en correspondance avec ladite paroi latérale interne (12), un certain nombre de dents (52) qui sont à même de permettre de saisir et de faire tourner le nipple (4) sur le côté de la paroi latérale interne (12) pour bloquer celui-ci entre les éléments de radiateur,
dans lequel les dents (52) sont constituées d'un seul tenant avec le corps de nipple (8), **caractérisé en ce que**
- le corps de nipple (8) comprend un noyau (28) en matériau métallique mécaniquement séparé du corps de nipple (8) et noyé à l'intérieur du corps (8) lui-même, dans lequel
- ledit noyau (28) comprend un collier cylindrique (32) doté d'un certain nombre de trous (36) qui sont à même de former une liaison entre le corps de nipple (8) et le noyau (28) noyé dans celui-ci.

2. Nipple (4) selon la revendication 1, dans lequel ladite matière plastique comprend un thermoplastique et/ou une matière plastique thermodurcissable.

3. Nipple (4) selon la revendication 1 ou 2, dans lequel ladite matière plastique comprend du Nylon chargé de fibres de verre.

4. Nipple (4) selon l'une quelconque des revendications précédentes, dans lequel ledit noyau (28) comprend un collier cylindrique (32) doté d'un certain nombre de protubérances ou de dents qui sont à même de former une liaison entre le corps de nipple (8) et le noyau (28) noyé dans celui-ci.

5. Nipple (4) selon l'une quelconque des revendications précédentes, dans lequel ledit noyau (28) présente, en correspondance avec les rebords axiaux (40), un profil régulier comprenant une alternance de nervures (44) et de rainures (48).

6. Nipple (4) selon la revendication 5, dans lequel ledit profil est un profil triangulaire, sinusoïdal ou en zigzag.

7. Nipple (4) selon l'une quelconque des revendications précédentes, dans lequel lesdites dents (52) s'étendent le long de la totalité de l'extension axiale du corps de nipple (8).

8. Nipple (4) selon l'une quelconque des revendications précédentes, dans lequel ladite paroi latérale externe (20) comprend un anneau central (56) délimité axialement par la paire de filets (24), ledit anneau central (56) étant symétrique au plan axial de manière à former une paroi de support constante et un siège pour un joint associable.

9. Radiateur comprenant au moins deux éléments de radiateur raccordés au plan fluidique et au plan mécanique l'un à l'autre par au moins un nipple (4) selon l'une quelconque des revendications 1 à 8.

10. Procédé de production d'un nipple (4) selon l'une quelconque des revendications 1 à 8, comprenant les phases :
- de prédisposition d'un noyau cylindrique (28) dans un matériau métallique,
- de positionnement dudit noyau (28) dans un moule pour la production du corps de nipple (8),
- d'injection d'une matière plastique de manière à former le corps de nipple (8) en englobant le noyau (28) dans la matière plastique.

11. Procédé de réalisation selon la revendication 10, dans lequel la phase de prédisposition du noyau métallique (28) comprend la phase de découpe d'une bande ayant une largeur axiale égale à celle du noyau (28) dans une feuille et la phase de roulement de la bande découpée en une forme cylindrique.

12. Procédé de réalisation selon la revendication 11, comprenant la phase de finition superficielle de la paroi latérale externe (20) du nipple (4) en correspondance avec les filets externes (24) et du siège ou de l'anneau central (56) pour le joint.
